# EUROPEAN PATENT APPLICATION

(11) **EP 1 754 997 A1**
(43) Date of publication of application: **21.02.2007**
(21) Application number: 06017032.1
(22) Date of filing: 16.08.2006
(51) Int. Cl.: G03B 15/02, F21V 5/04, F21V 14/06, F21V 17/02, G02B 27/09, G03B 15/03, G03B 15/04, G03B 15/06

(54) **Illuminator, LED illuminator, and imaging device with illuminator**

(30) Priority: 16.08.2005 JP 2005236005; 22.12.2005 JP 2005370844
(71) Applicant: KABUSHIKI KAISHA TOSHIBA, Tokyo 105-8001 (JP)
(72) Inventor: Okada, Naotada Intellectual Property Division, Minato-ku Tokyo 105-8001 (JP); Mori, Miki Intellectual Property Division, Minato-ku Tokyo 105-8001 (JP)
(74) Representative: HOFFMANN EITLE

(57) **Abstract**

The invention comprises an imaging mechanism (14), and an LED illuminator (20) which emits illuminating light to an imaging area of the imaging mechanism (14). The LED illuminator (20) includes a light emitting module (21) having light emitting elements (21) arranged therein, a Fresnel lens (22) which brings light from the light emitting module (21) into parallel rays of light, a pair of lens arrays (23, 24) arranged in a direction of light coming from the light source, the pair of lens arrays shaping the parallel rays of light produced by the Fresnel lens (22) into a rectangle, and an adjustment mechanism (25) which adjusts an interval between the lens arrays (23, 24) in accordance with an imaging area of the imaging mechanism (14).

## Description

The invention relates to an illuminator to be used as a light source for a projector, digital camera, or the like and an imaging device with an illuminator, and more particularly, relates to an illuminator designed to obtain illumination with sufficient illuminance even when, for example, an LED with relatively low output is used as a light emitting element.

The LED illuminator uses a light emitting module in which a plurality of LED elements (light emitting elements) are mounted on a substrate, and is known for various merits such as adjusting hues. Such an LED illuminator can also be used for indoor lighting, store lighting, and stage lighting (refer to, for example, Jpn. Pat. Appln. KOKAI Publication No. 2004-22257). Such an LED illuminator can also be utilized as an LED flash for a digital camera or for a cellular phone incorporating a camera.

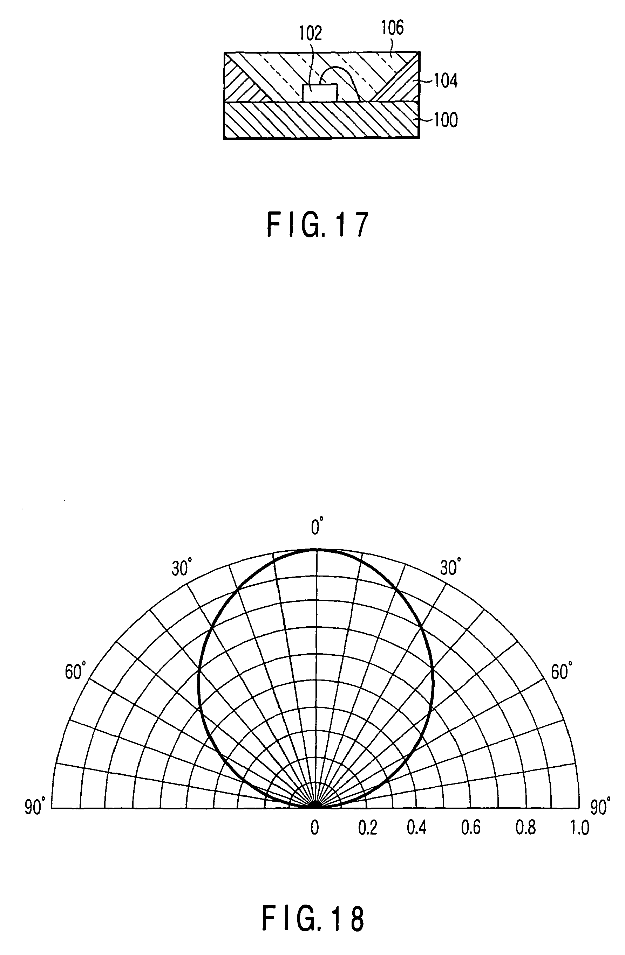

For example, a blue LED 102 is mounted on a ceramic substrate 100 as shown in FIG. 17. Light (not shown) from the blue LED 102 is directly emitted whereas a portion of it is reflected by a reflecting plate 104 to be emitted outside. At this time, the light passes through a yellow fluorescent substance 106 and becomes false white. In this case, as shown in FIG. 18, light from the light source exhibits a directivity characteristic in which 2θ_{1/2} is 110°, which is approximately Lambertian.

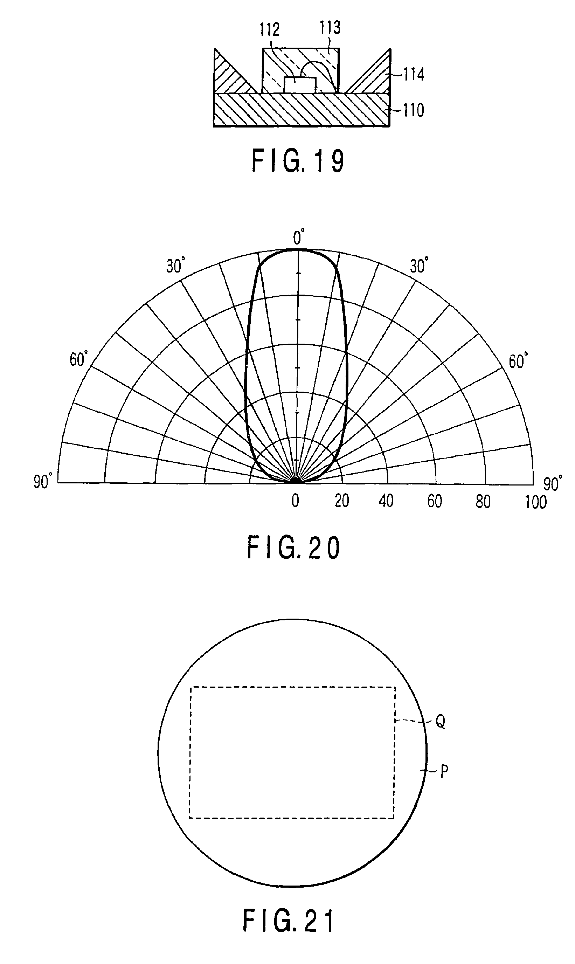

The angle of view of a digital camera or a camera incorporated in a cellular phone is generally about 60°. Therefore, a directivity angle of 110° as mentioned above is too wide. To counteract this, a structure is proposed as shown in FIG. 19, in which a blue LED 112 is mounted on a ceramic substrate 110 and the blue LED 112 is sealed in a fluorescent substance 113, thereby decreasing the directivity angle. In this structure, light from the LED 112 is passed through the fluorescent substance 113, and a portion of the light is reflected by a reflecting plate 114 and the other portion is directly emitted outside. The directivity angle at this time is such that 2θ_{1/2} is 50°, as shown in FIG. 20.

Using the above-described LED illuminator for a camera poses the problems described below. Specifically, an illuminated area of the LED illuminator as shown in FIG. 17 or 18 is almost circular, so that illuminance is highest in the center and gradually decreases with increase in the directivity angle. An area wider than the imaging area has to be illuminated in order to ensure uniform illuminance over the imaging area, which requires plural LEDs that emit a large quantity of light. However, an LED flash for use in a digital camera or a cellular phone incorporating a camera does not have sufficient illuminance due to battery capacity or the arrangement of the LED flash. Also, the periphery is dark compared to the center, which leads to degraded image quality at the periphery. In addition, blue light emitted from the LED and yellow light emitted from the fluorescent light are generally different in emitting position or directivity angle, and as a result, the illuminated area may not be uniform in color.

As shown in FIG. 21, an illuminated area P of the LED illuminator is almost circular whereas an imaging area Q captured by the camera is rectangular with a ratio of width and length of 4:3. Light that does not fall within the rectangle is not used, and therefore wasted. Further, a camera in a zooming operation has a narrower imaging range but the illuminated area is the same size. This means that the area not within the imaging area is extended, resulting in an increased unused, wasted area.

It is, accordingly, an object of the invention to provide an illuminator that provides illumination with sufficient, uniform illuminance even if using a light emitting element, such as an LED, having a relatively low output, or other light emitting devices, and also to provide an LED illuminator and an imaging device with an illuminator.

One aspect of the invention is characterized by comprising: a light source having a light emitting element arranged therein; a collimating unit which brings light from the light source into parallel rays of light; and a lens array which shapes the parallel rays of light produced by the collimating unit. In addition, the lens arrays function of shaping the parallel rays of light produced by the collimating unit.

Another aspect of the invention is characterized by comprising: a light source having a light emitting element arranged therein; a collimating unit which brings light from the light source into parallel rays of light; a pair of lens arrays arranged in a direction of light coming from the light source, the pair of lens arrays shaping the parallel rays of light produced by the collimating unit into a rectangle; and an adjustment mechanism which adjusts an interval between the pair of lens arrays.

Still another aspect of the invention is characterized by comprising: an imaging mechanism; and an illuminator which emits illuminating light to an imaging area of the imaging mechanism, the illuminator having: a light source having a light emitting element arranged therein; a collimating unit which brings light from the light source into parallel rays of light; a pair of lens arrays arranged in a direction of light coming from the light source, the pair of lens arrays shaping the parallel rays of light produced by the collimating unit into a rectangle; and an adjustment mechanism which adjusts an interval between the pair of lens arrays in accordance with the imaging area of the imaging mechanism.

According to the invention, illumination with sufficient, uniform illuminance is obtained even where a light emitting element the output of which is relatively low is used.

The invention can be more fully understood from the following detailed description when taken in conjunction with the accompanying drawings, in which:
FIG. 1 is a perspective view showing a personal digital assistant with a digital camera incorporating an illuminator according to a first embodiment of the invention;
FIG. 2 is an explanatory view schematically showing an LED flash incorporated in the personal digital assistant;
FIG. 3 is a plan view showing a lens array incorporated in the LED,flash;
FIG. 4 is an explanatory view showing a light emitting area of the LED flash;
FIG. 5 is an explanatory view showing a light emitting area of the LED flash;
FIG. 6 is an explanatory view showing a relation between an illuminated area R and an imaging area Q of the personal digital assistant;
FIG. 7 is an explanatory view showing the relative illuminance of the LED flash in comparison with that of a general illuminator;
FIG. 8 is an explanatory view showing a light emitting area of an illuminator according to a comparative example;
FIG. 9 is an explanatory view showing a light emitting area of the LED flash;
FIG. 10 is an explanatory view showing a relation between a drive current value and a luminous flux;
FIG. 11 is an explanatory view showing a relation between a drive current and center illuminance at a position 1m away from an LED illuminator;
FIG. 12 is a vertical sectional view schematically showing the main part of a cellular phone according to a second embodiment of the invention;
FIG. 13 is a vertical sectional schematic view showing the main part of a cellular phone according to a third embodiment of the invention;
FIG. 14 is an explanatory view showing the effects of a Fresnel lens;
FIG. 15 is an explanatory view showing the effects of a Fresnel lens;
FIG. 16 is a sectional view showing a modified example using a reflector;
FIG. 17 is a sectional view showing an example of an LED illuminator;
FIG. 18 is an explanatory view showing the directivity characteristics of the LED illuminator;
FIG. 19 is a sectional view showing an example of an LED illuminator;
FIG. 20 is an explanatory view showing the directivity characteristics of the LED illuminator; and
FIG. 21 is an explanatory view showing a relation between an illuminated area P and imaging area Q in a prior art.

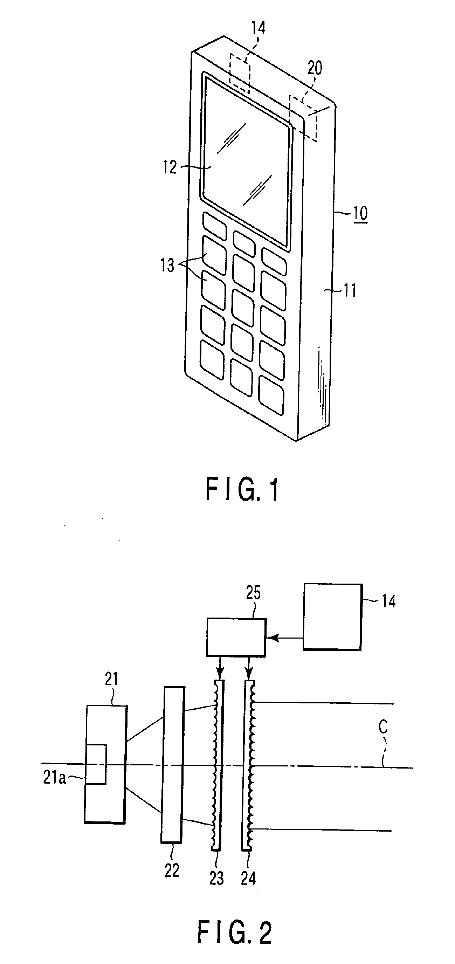

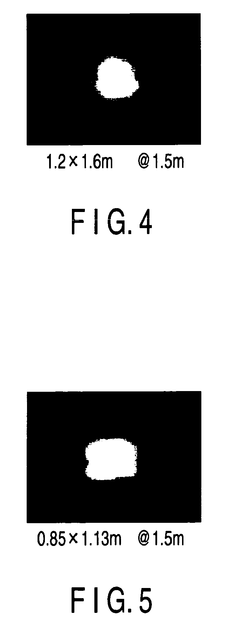

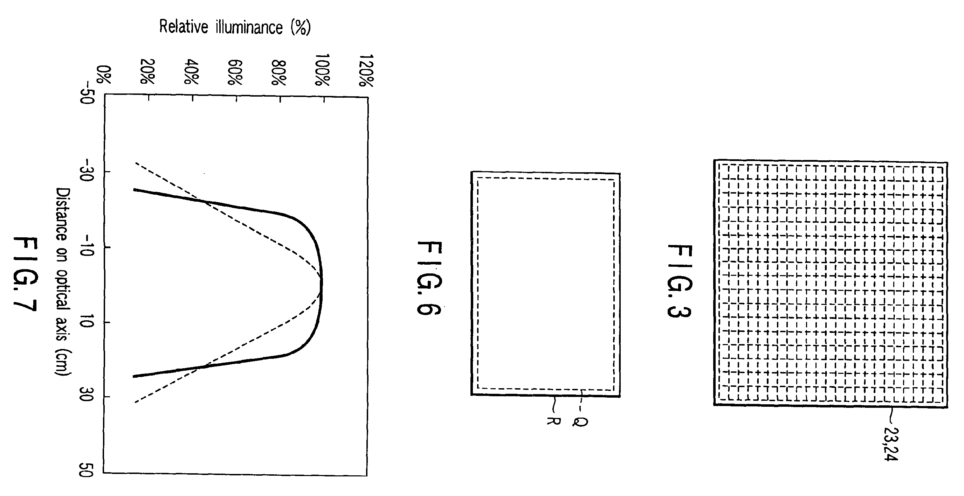

FIG. 1 is a perspective view showing a personal digital assistant 10 with a digital camera incorporating an illuminator according to a first embodiment of the invention. FIG. 2 is an explanatory view schematically showing an LED flash 20 incorporated in the personal digital assistant 10. FIG. 3 is a plan view of lens arrays 23 and 24 incorporated in the LED flash 20. FIG. 6 is an explanatory view showing a relation between an illuminated area R and an imaging area Q.

The personal digital assistant 10 has a parallelepipedic housing 11. Arranged on the surface of the housing 11 are a display LCD 12 and various operation buttons 13. Arranged on the back of the housing 11 are a CCD camera (imaging device) 14 with a zoom lens and an LED flash (illuminator) 20.

The LED flash 20 comprises, in order along an optical axis C: a light emitting module 21; a Fresnel lens 22 made of an acrylic material (an example of a resin material); the pair of lens arrays 23 and 24 made of polycarbonate materials; and an adjustment mechanism 25 for adjusting an interval between the lens arrays 23 and 24 based upon a distance signal from the CCD camera 14. In the present embodiment, an acrylic resin and a polycarbonate resin are used as the materials of the lens arrays 23 and 24. However, the materials of the lenses are not limited thereto.

The light emitting module 21 has one or two LED elements 21a. The LED element 21 is adjusted to emit white light by combining blue and yellow, for example, by applying a yellow fluorescent substance to a 500 x 500-µm GaN blue LED. A luminous flux of 30 to 401m is obtained from the LED element 21a. Note that the LED element 21a for use in the light emitting module 21 is not limited to a blue LED.

Each lens array 23, 24 comprises 23 × 17 spherical lenses (each one an example of a refraction type convex lens) each having a radius of 0.4 mm, which are arranged such that each lens array is 10 mm in length, 10 mm in width, and 0.5 mm in depth. These spherical lenses form a fly-eye optical system. Accordingly, light passed through the fly-eye optical system is made uniform in shape. The function of the adjustment mechanism 25 is to adjust the interval between the lens arrays 23 and 24 based upon a distance signal from the CCD camera 14. The interval between the lens arrays 23 and 24 is determined in accordance with the dimensions of a projection area. In the present embodiment, the lens arrays 23 and 24 are separate components. However, the lens arrays 23 and 24 can be integrated as by injection molding. Depending on the design of each spherical lens described above, light can be easily shaped into a rectangle. In the case where the projection area is fixed, the adjustment mechanism 25 may be omitted.

In the thus configured personal digital assistant 10, the LED flash 20 is lit if a quantity of light is insufficient to carry out imaging by the CCD camera 14. In this case, light emitted from the blue LED 21a is collimated (shaped into parallel rays) with a divergence angle of 30° (total angle) by the Fresnel lens 22 arranged just behind the blue LED 21a. The collimated light enters the lens arrays 23 and 24.

In this case, the interval between the lens arrays 23 and 24 is determined by the illuminated area. For example, if the interval between the lens arrays 23 and 24 is 0, a light emitting area of 1.2 × 1.6m is obtained at a distance of 1.5m, as shown in FIG. 4. If the interval between them is 0.13 mm, a light emitting area of 0.85 × 1.13m is obtained at a distance of 1.5 mm, as shown in FIG. 5.

The effect is improved by matching the interval between the lens arrays 23 and 24 with the degree of zoom of the CCD camera 14. Specifically, an imaging area is calculated from the degree of zoom of the CCD camera 14, and the interval between the lens arrays 23 and 24 is adjusted so as to match this imaging area. For example, the interval between the lens arrays 23 and 24 can be set to 0 or 0.13 mm, as in the examples mentioned above.

On the other hand, the shape of the illuminated area R is almost rectangular, as shown in FIG. 6, so that the area where emitted light is superfluous is minimized. Accordingly, a low output of the LED 21a is enough for use in LED flash 20. Consequently, sufficiently bright illumination can be ensured without increasing battery capacity.

The effects of the lens arrays 23 and 24 will now be explained. For example, in the case of an LED illuminator as shown in FIG. 17, the illuminance distribution on an optical axis, for example, at a position 50 cm away from the device, is such that the illuminance of the center is highest and gradually decreases towards the edge, as indicated by the broken line shown in FIG. 7. In the case of the LED illuminator 20 using the lens arrays 23 and 24, the illuminance gently decreases towards the edge from the center, and suddenly decreases outside the light emitting area, as indicated by the solid line in FIG. 7. That is, using the lens arrays 23 and 24 ensures uniform illumination.

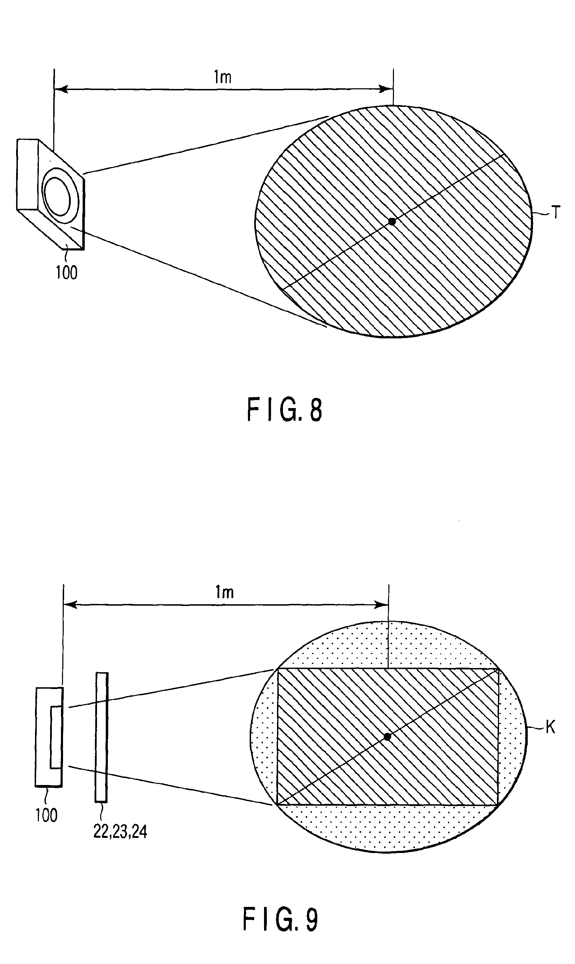

Next, a description is given of the effects of shaping light into a rectangle. FIG. 8 is a schematic view showing a light emitting area T the illuminance of the edge of which is half the illuminance of the center at a position 1m away from the LED illuminator (comparative example) shown in FIG. 17, which has a directivity angle (= 2θ _{1/2}) of 50°. At this time, the diameter of the light emitting area T is that of a circle or ellipse having a diameter of approximately 93 cm. FIG. 9 is a schematic view showing a light emitting area K 1m away from the LED flash 20, as shown in FIG. 2. At this time, the diagonal of the light emitting area K is approximately 93 cm.

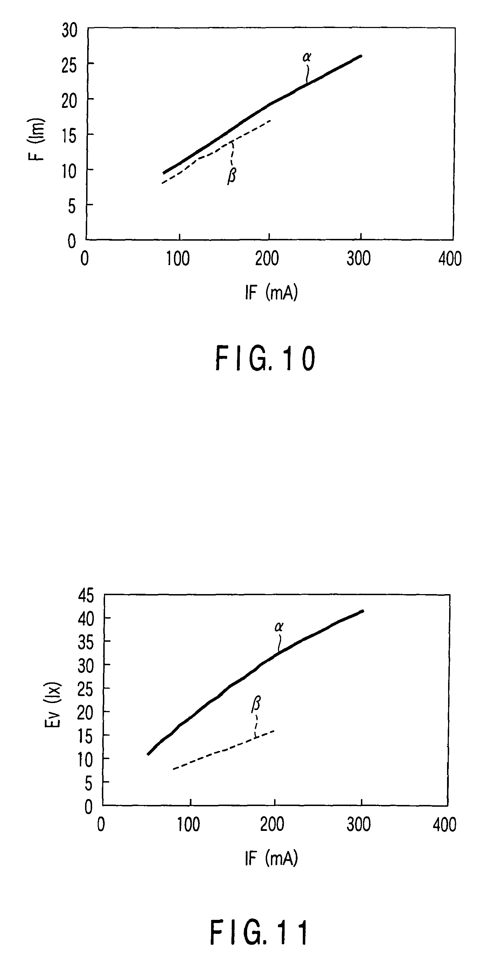

FIG. 10 is an explanatory view showing a relation between a drive current value and a luminous flux. FIG. 11 is an explanatory view showing a relation between the drive current and the center illuminance at a position 1m away from the LED illuminator. In the graph, α represents the LED flash 20 and β represents a comparative example. Assuming that a relation between a quantity of light (luminous flux) emitted from the LED illuminator and the center illuminance of an area to be illuminated is expressed, in terms of light use efficiency, by illuminance/luminous flux (1x/1m). In this case, the light use efficiency of the comparative example and that of the LED flash 20 are 0.9 and 1.6 respectively when they are driven by 200 mA. This means that the LED flash 20 is higher in light use efficiency than the comparative example. In other words, light use efficiency is improved by making the light emitting area rectangular rather than circular.

As described above, the personal digital assistant 10 with a digital camera incorporating an illuminator ensures illumination with sufficient, uniform illuminance even if a relatively low output LED is used as a light emitting device.

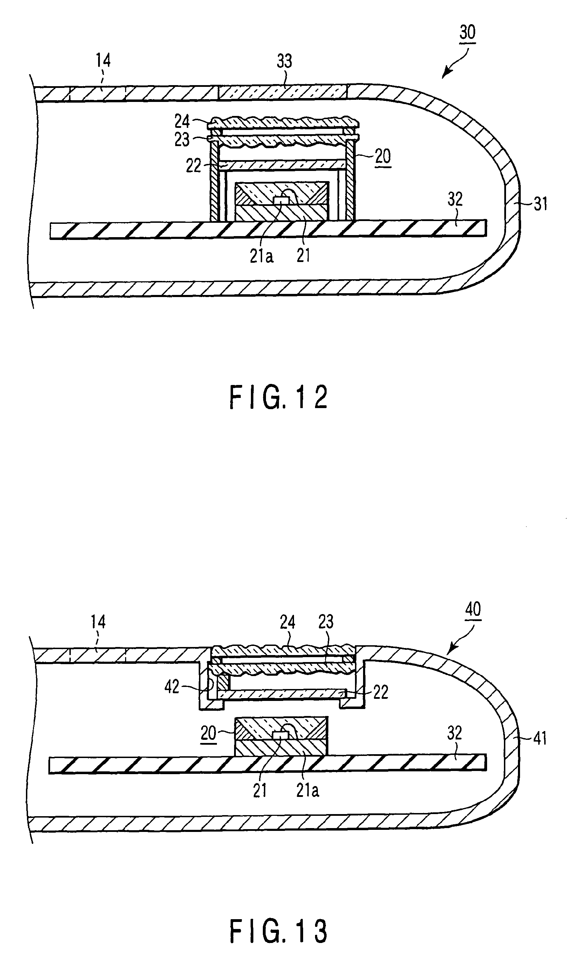

FIG. 12 is a vertical sectional view schematically showing the main part of a cellular phone 30 according to a second embodiment of the invention. The same functional components as those shown in FIG. 2 are denoted by the same reference numerals in FIG. 12, and the detailed description thereof is omitted.

The cellular phone 30 has an LED flash 20 incorporated in a housing 31. With reference to FIG. 12, a light emitting module 21 and a lens module comprising a Fresnel lens 22 and lens arrays 23 and 24 are mounted on a substrate 32. Light from the light emitting module 21 is emitted through a transparent cover 33 fitted in the upper part of the housing 31. In this case, the light emitting module 21 is soldered to the substrate 32, and the lens module is joined to the substrate 32 with an adhesive.

Another method such as notching the light emitting module 21 and then fitting the lens module into the light emitting module 21 can also be used.

FIG. 13 is a vertical sectional view schematically showing the main part of a personal digital assistant 40 according to a third embodiment of the invention. The same functional components as those shown in FIG. 12 are denoted by the same reference numerals in FIG. 13, and the detailed description thereof is omitted.

In a cellular phone 40, a lens module is fitted into a recess 42 formed in the housing 41.

The Fresnel lens 22 and the lens arrays 23 and 24 are all separate lenses. However, one face of the lens array 23 may be a Fresnel lens and the other may be a lens array. According to the present embodiment, more uniform illumination is obtained by the lens arrays 23 and 24, in the case where the light emitting area is not rectangular but circular.

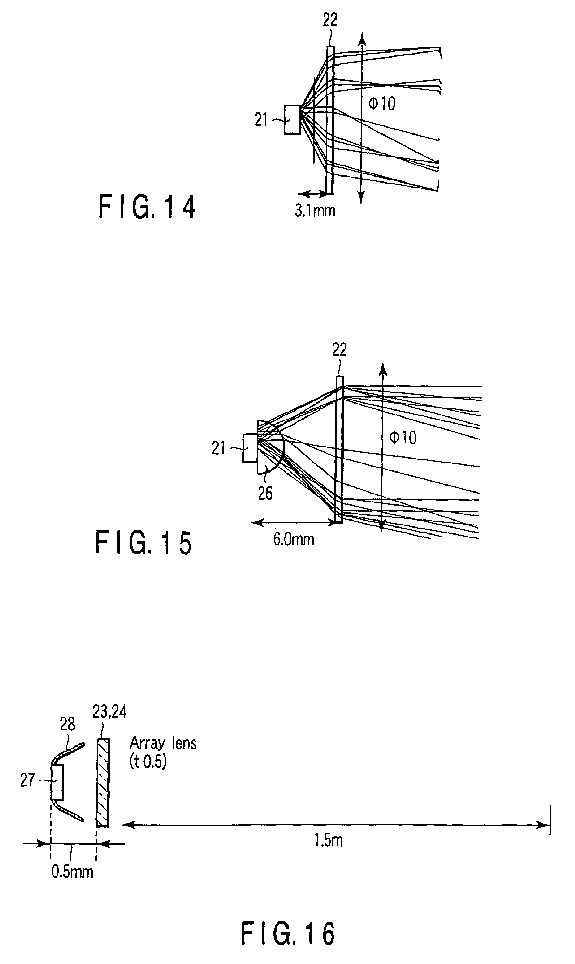

FIG. 14 is an explanatory view showing the effects of collimation by the Fresnel lens 22. FIG. 14 shows an example of using one Fresnel lens 22 arranged at a position 3.1 mm away from the light emitting module 21. FIG. 15 shows an example where a convex lens 26 is arranged in the vicinity of the light emitting module 21 and the Fresnel lens 22 is arranged at a position 6 mm away from the light emitting module 21. The rays of light shown in FIG. 15 are collimated more nearly than those shown in FIG. 14, and efficiency improves 20%.

The embodiments described above use the method in which rays of light are collimated by the Fresnel lens 22, but alternatively may use a method in which rays of light collimated by a curved reflector 28 and an LED 27 that emits light sideways are made incident to the lens arrays 23 and 24 as shown in FIG. 16.

A method for adjusting the lens interval uses an electromagnetic actuator, an electrostatic actuator, or the like. In the embodiments described above, an electromagnetic actuator is used.

The LED illuminator is used in a cellular phone with a camera but can also be used in a digital camera or a projector.

It is to be understood that the invention is not limited to the embodiments described above, and the invention is intended to cover various modifications within the spirit and scope of the invention. In addition, suitable combinations of various elements of the embodiments described above enable to form various inventions. For example, some structural elements may be omitted from all the structural elements of each embodiment, or the structural elements of different embodiments may be appropriately combined.

## Claims

1. An illuminator (20) **characterized by** comprising:
a light source (21) having a light emitting element (21a) arranged therein;
a collimating unit (22) which brings light from the light source (21) into parallel rays of light; and
a lens array (23) which shapes the parallel rays of light produced by the collimating unit.

2. An illuminator (20) according to claim 1, **characterized in that** the collimating unit (22) has a Fresnel lens.

3. An illuminator according to claim 1, **characterized in that** the collimating unit (22) has a reflecting structure which reflects light from the light emitting element (21a).

4. An illuminator (20) according to claim 1, **characterized in that** the lens array (23) is formed from a plurality of refraction type convex lenses.

5. An illuminator (20) according to claim 1, **characterized in that** the light emitting element (21a) has a white LED produced by combining a blue LED with a yellow fluorescent substance.

6. An LED illuminator (20) **characterized by** comprising:
a light source (21) having an LED element (21a) arranged therein;
a collimating unit (22) which brings light from the light source (21) into parallel rays of light;
a pair of lens arrays (23, 24) arranged in a direction of light coming from the light source (21), the pair of lens arrays (23, 24) shaping the parallel rays of light produced by the collimating unit (22); and
an adjustment mechanism (25) which adjusts an interval between the pair of lens arrays (23, 24).

7. An imaging device with an illuminator (20), **characterized by** comprising:
an imaging mechanism (14); and
an illuminator (20) which emits illuminating light to an imaging area of the imaging mechanism (14), the illuminator (20) having:
a light source (21) having a light emitting element (21a) arranged therein;
a collimating unit (22) which brings light from the light source (21) into parallel rays of light;
a pair of lens arrays (23, 24) arranged in a direction of light coming from the light source (21), the pair of lens arrays (23, 24) shaping the parallel rays of light produced by the collimating unit (22); and
an adjustment mechanism (25) which adjusts an interval between the pair of lens arrays (23, 24) in accordance with the imaging area of the imaging mechanism (14).
